# EUROPÄISCHE PATENTANMELDUNG

(11) **EP 3 050 615 A1**
(43) Veröffentlichungstag der Anmeldung: **03.08.2016**
(21) Anmeldenummer: 15153470.8
(22) Anmeldetag: 02.02.2015
(51) Int. Cl.: B01F 5/06, B01D 53/90, B01F 3/04, F01N 3/28, F01N 13/00

(54) **Strömungseinheit, Abgasreinigungsanlage und Verfahren für eine Abgasreinigungsanlage**

(71) Anmelder: Winterthur Gas & Diesel AG, 8401 Winterthur (CH)
(72) Erfinder: Seling, Fernando, 79802 Dettighofen (DE)
(74) Vertreter: Intellectual Property Services GmbH

(57) **Zusammenfassung**

Die Erfindung betrifft eine Strömungseinheit (1) für eine Abgasreinigungsanlage (6) zur Reinigung eines Abgases einer Hubkolbenbrennkraftmaschine. Die Strömungseinheit (1) umfasst ein Leitelement (3), das als ein hohler Körper mit einem Leitelementeingang (31) und einem Leitelementausgang (32) ausgebildet ist, und eine Mantelfläche des Leitelements als Leitfläche (33) ausgebildet ist, und ein Bremselement (2), das als ein hohler Körper mit einem Bremseingang (21) und einem Bremsausgang (22) ausgebildet ist, und eine Mantelfläche des Bremselements als Bremsfläche (23) ausgebildet ist. Im Betriebszustand ist ein Abgas in den Leitelementeingang (31) einströmbar und durch den Bremsausgang (22) ausströmbar. Die Leitfläche (33) ist derart ausgestaltet und zur Bremsfläche (23) angeordnet, dass das Abgas unter einem vorgebbaren Abbremswinkel α>0 auf die Bremsfläche (23) auftrifft und am Bremsausgang (22) eine Scherschicht aus Abgas ausbildbar ist. Die Erfindung betrifft im Weiteren eine Abgasreinigungsanlage mit einer Strömungseinheit gemäss der vorliegenden Erfindung sowie ein Verfahren für eine Abgasreinigungsanlage.

## Beschreibung

Die Erfindung betrifft eine Strömungseinheit für eine Abgasreinigungsanlage zur Reinigung eines Abgases einer Hubkolbenbrennkraftmaschine gemäß dem Oberbegriff des Anspruchs 1, eine Abgasreinigungsanlage zur Reinigung eines Abgases einer Hubkolbenbrennkraftmaschine gemäß dem Oberbegriff des Anspruchs 14 und Verfahren für eine Abgasreinigungsanlage zur Reinigung eines Abgases einer Hubkolbenbrennkraftmaschine gemäss dem Oberbegriff des Anspruchs 15.

Hubkolbenbrennkraftmaschine, insbesondere Grossdieselmotoren bzw. Zweitakt-Grossdieselmotoren, werden heutzutage in einem sehr breiten Spektrum von Anwendungen eingesetzt, beispielsweise als Hauptantriebsmaschinen von Schiffen oder als stationäre Maschinen zum Betreiben von Generatoren zur lokalen stationären Stromgewinnung. Die Hubkolbenbrennkraftmaschinen verbrennen Schweröl, ein dickflüssiger Brennstoff, der in Raffinerien als ein Abfallprodukt bei der Herstellung von Benzin und Diesel, die dem Rohöl entnommen werden, übrig bleibt, wenn die hochwertigen Bestandteile entnommen worden sind. Bei der Verbrennung von Schweröl entstehen Stickoxide (abgekürzt NOx). Ein Ergebnis dieses Sachverhaltes ist, dass die Schifffahrt für einen wesentlichen Teil der Schadstoffe in der Luft verantwortlich ist.

Aus diesem Grund ist die Schadstoffbegrenzung ein wichtiger Faktor bei Konstruktion und Steuerung von Hubkolbenbrennkraftmaschine. Die erwähnten NOx sind bekannte Verbrennungsnebenprodukte. NOx wird durch in der Ansaugluft der Hubkolbenbrennkraftmaschine vorhandenen Stickstoff-und Sauerstoffmoleküle, die sich bei den hohen Verbrennungstemperaturen trennen, erzeugt, und Raten von NOx-Erzeugung umfassen bekannte Beziehungen zu dem Verbrennungsprozess, wobei zum Beispiel höhere Raten von NOx-Erzeugung mit höheren Verbrennungstemperaturen und einem längeren Einwirken der höheren Temperaturen auf Luftmoleküle einhergehen. Erwünscht sind die Reduktion von im Verbrennungsprozess erzeugtem NOx und die NOx-Steuerung beispielsweise in einer Abgasreinigungsanlage.

Es sind Abgasreinigungsanlagen bekannt, die chemische Reaktionen nutzen, um das Abgas zu behandeln. Eine beispielhafte Abgasreinigungsanlage umfasst eine Vorrichtung für selektive katalytische Reduktion (SCR). Beim Harnstoff-SCR-Verfahren wird eine Harnstoff-Wasser-Lösung in das Abgassystem eingebracht. Diese Harnstoff-Wasser-Lösung dient zur Erzeugung von Ammoniak, das als Reduktionsmittel im Katalysator mit den NOx zu N2 und H2O reagiert. Das optimale molare Ammoniak/NOx Verhältnis ist nährungsweise eins.

Da präzise Informationen bezüglich NOx-Emissionen, beispielsweise die Konzentration des NOx im Abgas, aber meistens unbekannt ist, ist, um eine effektive NOx-Reduktion zu erreichen, die Verteilung der richtigen Menge an Zusatz und die Vermischung des Zusatz mit dem Abgas sowie eine gleichförmige Strömung des Abgases in der Abgasreinigungsanlage umso wichtiger. Die Nachbehandlung des Abgases in einer Abgasreinigungsanlage einer Hubkolbenbrennkraftmaschine ist jedoch mit gewissen Schwierigkeiten und Nachteilen behaftet. Eine ungleichförmige Strömung des Abgases bzw. des Gemisch aus Abgas und dem Zusatz, bevorzugt Harnstoff, sowie eine ungleichmässige Verteilung und Durchmischung beeinflussen die Abgasreinigung in der Abgasreinigungsanlage wesentlich und können einerseits zu einer ineffektiven Schadstoffreduktion und andererseits zu einem unnötig hohen Material- und Platzaufwand der Abgasreinigungsanlage führen. Auch ein fehlerhafter Umgang mit dem Abgas bzw. mit einem Gemisch aus Abgas und Zusatz, beispielsweise indem ein Übermaß des Zusatzes über die erforderliche Menge hinaus oder zu wenig geliefert wird, führt zu einer ineffektiven Behandlung des Abgases.

Ausgehend von diesem Stand der Technik, ist es daher eine Aufgabe der Erfindung eine Strömungseinheit, eine Abgasreinigungsanlage und ein Verfahren vorzuschlagen, welche eine gleichförmige Strömung und / oder eine homogene gleichmässige Durchmischung und Verteilung des Abgases oder eines Gemischs aus Abgas und einem Zusatz ermöglichen, wobei insbesondere eine effektivere Abgasreinigung und einfache Herstellung der Abgasreinigungsanlage erreicht wird.

Diese Aufgabe wird durch eine Strömungseinheit mit den Merkmalen des Anspruchs 1, eine Abgasreinigungsanlage mit den Merkmalen des Anspruchs 14 und ein Verfahren für eine Abgasreinigungsanlage mit den Merkmalen des Anspruchs 15 gelöst.

Die abhängigen Ansprüche beziehen sich auf besonders vorteilhafte Ausführungsformen der Erfindung.

Die Erfindung betrifft eine Strömungseinheit für eine Abgasreinigungsanlage zur Reinigung eines Abgases einer Hubkolbenbrennkraftmaschine, insbesondere eines Zweitakt-Grosdieselmotors, wobei die Strömungseinheit ein Leitelement, das als ein hohler Körper mit einem Leitelementeingang und einem Leitelementausgang ausgebildet ist, und eine Mantelfläche des Leitelements als Leitfläche ausgebildet ist, und ein Bremselement, das als ein hohler Körper mit einem Bremseingang und einem Bremsausgang ausgebildet ist, und eine Mantelfläche des Bremselements als Bremsfläche ausgebildet ist, umfasst. Im Betriebszustand ist ein Abgas in den Leitelementeingang einströmbar und durch den Bremsausgang ausströmbar. Erfindungsgemäss ist die Leitfläche derart ausgestaltet und zur Bremsfläche angeordnet, dass das Abgas unter einem vorgebbaren Abbremswinkel α>0 auf die Bremsfläche auftrifft und am Bremsausgang eine Scherschicht aus Abgas ausbildbar ist.

Das Leitelement und / oder das Bremselement können aus einem Kunststoff oder einem Metall sein. Das Leitelement und / oder das Bremselement können eine zylindrische Form aufweisen, wobei entscheidend ist, dass die Leitfläche des Leitelements derart ausgestaltet und zur Bremsfläche angeordnet, dass das Abgas unter einem vorgebbaren Abbremswinkel α>0 auf die Bremsfläche auftrifft. Aufgrund der Anordnung der Leitfläche des Leitelements und der Bremsfläche des Bremselements wird ein Teil der Strömung des Abgas oder eines Gemischs aus Abgas und einem Zusatz, der durch die Strömungseinheit strömt und auf die Leitfläche bzw. Bremsfläche auftrifft, abgebremst, wohingegen ein anderer Teil der Strömung um die Leitfläche bzw. Bremsfläche herumströmt. Treffen die beiden Teile am Bremsausgang aufeinander, ist eine Scherschicht am Bremsausgang aus Abgas oder dem Gemisch aus Abgas und dem Zusatz ausbildbar.

Wesentlich für die Erfindung ist also, dass das Abgas von der Leitfläche des Leitelements derart umgelenkt wird, dass es auf die Bremsfläche unter einem vorgebbaren Winkel α>0 auftrifft. Dadurch können unterschiedlich lange Laufwege der Strömung bzw. unterschiedliche Teilströmungen mit unterschiedlichen Strömungsgeschwindigkeiten am Bremsausgang erreicht werden. Das hat eine Verstärkung der Vermischung des Abgases bzw. ein Gemischs aus dem Abgas und einem Zusatz, insbesondere Harnstoff, zur Folge. Somit wird eine gleichförmige Strömung und / oder eine homogene gleichmässige Durchmischung und Verteilung des Abgases oder eines Gemischs aus Abgas und dem Zusatz erreicht, welche wiederum eine effektivere Abgasreinigung und einfache Herstellung der Abgasreinigungsanlage ermöglichen.

Die Abgasreinigungsanlage ist insbesondere als ein SCR-Katalysator ausgeführt oder weist zumindest einen SCR-Katalysator auf. Sie kann aber auch als eine andere Art von Katalysator oder Abgasreinigungselement ausgeführt sein. Ein Auslass ist insbesondere als ein Kamin oder beispielsweise auch als eine Auspuffanlage ausgeführt. Beim aktiven Zustand der Abgasreinigungsanlage ist es auch möglich, dass nicht das gesamte Abgas des Verbrennungsmotors, sondern nur ein Teil durch die Abgasreinigungsanlage strömt.

In Ausgestaltung der Erfindung ist das Leitelement als ein sich in Richtung zum Leitelementausgang verengender hohler Körper, insbesondere in Form eines geraden oder nicht geraden Kegels oder Kegelstumpfs ausgebildet, und das Bremselement als ein sich in Richtung zum Bremsausgang erweiternder hohler Körper, insbesondere in Form eines geraden oder nicht geraden Kegels oder Kegelstumpfs ausgebildet. Ebenso kann ein Leitelementquerschnitt des Leitelements, als eine sich in Richtung des Leitelementausgangs verkleinernde Querschnittsfläche ausgebildet sein und / oder ein Bremsquerschnitt des Bremselements kann als eine sich in Richtung des Bremsausgangs vergrössernde Querschnittsfläche ausgebildet sein. Der Fachmann versteht dabei ohne weiteres wie er diese und weitere Möglichkeiten zur Herstellung einer erfindungsgemässen Strömungseinheit geeignet nutzt und / oder kombiniert um den Aufbau der Strömungseinheit an das Strömungsprofil des einströmenden Abgases oder Gemisches aus Abgas und dem Zusatz anzupassen.

In Ausgestaltung der Erfindung ist das Leitelement als ein sich in Richtung zum Leitelementausgang erweiternder hohler Körper, insbesondere in Form eines geraden oder nicht geraden Kegels oder Kegelstumpfs ausgebildet, und das Bremselement als ein sich in Richtung zum Bremsausgang verengender hohler Körper, insbesondere in Form eines geraden oder nicht geraden Kegels oder Kegelstumpfs ausgebildet. Ebenso kann ein Leitelementquerschnitt des Leitelements als eine sich in Richtung Leitelementausgangs vergrössernde Querschnittsfläche ausgebildet sein und / oder ein Bremsquerschnitt des Bremselements kann als eine sich in Richtung des Bremsausgangs verkleinernde Querschnittsfläche ausgebildet sein.

Es versteht sich, dass alle Ausführungsformen möglicher Leitelemente und Bremselemente, wie sie im Rahmen der vorliegenden Anmeldung beschrieben bzw. nahegelegt sind, entweder allein oder in allen geeigneten Kombinationen in einer erfindungsgemässen Strömungseinheit vorgesehen sein können.

In Ausgestaltung der Erfindung sind das Leitelement und / oder das Bremselement entlang einer gemeinsamen Längsachse L angeordnet. Die Anordnung des Leitelements und / oder des Bremselements kann dabei symmetrisch oder asymmetrisch zur Längsachse L erfolgen. Der Leitelementquerschnitt und / oder der Bremsquerschnitt ist kreisförmig und / oder ellipsenförmig und / oder in Form eines regelmässigen oder unregelmässigen Vielecks, insbesondere in Form eines Dreiecks oder eines Vierecks oder eines Fünfecks ausgebildet. In Ausgestaltung der Erfindung ist vor dem Leitelementeingang ein Injektor angeordnet. Ebenso kann der Injektor am Leitelementeingang und / oder zwischen dem Leitelement und dem Bremselement und / oder am Bremsausgang angeordnet sein. Der Injektor ist derart ausgestaltet und angeordnet, dass ein Zusatz in das Abgas injizierbar ist, sodass am Bremsausgang eine Scherschicht aus Abgas und dem Zusatz ausbildbar ist. Der Injektor kann als eines oder mehrere Halterohre ausgebildet sein, wobei das Halterohr eines oder mehrere koaxiale Leitelemente verbinden kann, wobei der Zusatz durch das Halterohr strömbar und in das Abgas injizierbar ist.

Die Strömungseinheit kann zwischen, insbesondere vor, einem Reaktor der Abgasreinigungsanlage und einem Abgaseingang, der mit einem Abgasausgang eines Abgassammelrohrs der Hubkolbenbrennkraftmaschine verbunden ist, angeordnet sein. Der Injektor kann vor der Strömungseinheit vor dem Leitelementeingang, also zwischen Strömungseinheit und dem Abgaseingang angeordnet sein. Der Injektor kann also an einem Abgaseingang, unmittelbar nach dem Abgasausgang angeordnet sein oder aber zwischen der Strömungseinheit und dem Abgaseingang oder unmittelbar vor der Strömungseinheit oder direkt am Leitelementeingang. Der Injektor kann aber auch als ein Bauteil der Strömungseinheit ausgebildet sein, also am Leitelementeingang und / oder zwischen dem Leitelement und dem Bremselement am Bremseingang und / oder am Bremsausgang angeordnet sein. Vorteilhafterweise kann somit auf ein Einlassrohr und / oder ein Reaktionsrohr, in welchem eine Reaktion des Abgases mit dem Zusatz stattfindet, in der Abgasreinigungsanlage verzichtet werden und die Abgasreinigungsanlage kann kostengünstiger und einfacher hergestellt werden.

In Ausgestaltung der Erfindung umfasst die Strömungseinheit ein weiteres Leitelement, insbesondere ein zum Leitelement identisches weiteres Leitelement, und / oder ein weiteres Bremselement, insbesondere ein zum Bremselement identisches weiteres Bremselement. Das Leitelement und das weitere Leitelement und / oder das Bremselement und das weitere Bremselement können koaxial angeordnet sein. Das Leitelement und / oder das weitere Leitelement und / oder das Bremselement und / oder das weitere Bremselement können entlang der gemeinsamen Längsachse L angeordnet sein. Die Strömungseinheit kann also ein weiteres Leitelement umfassen. Das weitere Leitelement kann insbesondere in Bezug auf Form oder Geometrie des Leitelements ähnlich sein, beispielsweise die gleiche Form aber einen anderen Radius aufweisen, oder sogar zum Leitelement identisches sein. Ebenso kann die Strömungseinheit ein weiteres Bremselement umfassen, wobei das weitere Bremselement insbesondere in Bezug auf Form oder Geometrie dem Bremselement ähnlich sein kann, beispielsweise die gleiche Form aber einen anderen Radius aufweisen kann, oder sogar zum Bremselement identisches sein kann. Das Leitelement und das weitere Leitelement können koaxial und / oder das Bremselement und das weitere Bremselement können koaxial angeordnet sein. Ausserdem können das Leitelement und / oder das weitere Leitelement und / oder das Bremselement und / oder das weitere Bremselement symmetrisch oder asymmetrisch zur Längsachse angeordnet sein. Vorteilhafterweise sind somit mehrere Scherschichten aus Abgas bzw. aus dem Gemisch aus Abgas und dem Zusatz am Bremsausgang ausbildbar und der beschriebene Effekt das Erreichen der homogenen Durchmischung und / oder einer gleichförmigen Strömung nochmals multipliziert und verbessert werden.

In Ausgestaltung der Erfindung beträgt der vorgebbare Abbremswinkel zwischen 0° ≤ α ≤ 60°, bevorzugt zwischen 20° ≤ α ≤ 40°. Ein Abbremswinkel in diesem Bereich hat den Effekt, dass die Strömung besonders gleichförmig ist und eine besonders gute homogene gleichmässige Durchmischung und Verteilung des Abgases oder eines Gemischs aus Abgas und einem Zusatz ermöglicht wird. Alle beschriebenen Ausgestaltungen und Massnahmen der Strömungseinheit haben den Vorteil, dass das Abgas von der Leitfläche des Leitelements derart umgelenkt wird, dass es auf die Bremsfläche unter einem vorgebbaren Winkel α>0 auftrifft. Dadurch können unterschiedlich lange Laufwege der Strömung bzw. unterschiedliche Teilströmungen mit unterschiedlichen Strömungsgeschwindigkeiten am Bremsausgang erreicht werden. Das hat eine Verstärkung der Vermischung des Abgases bzw. ein Gemisch aus dem Abgas und einem Zusatz, insbesondere Harnstoff, zur Folge. Es entstehen gezielt Verwirbelungen, wobei eine Scherschicht aus Abgas bzw. aus Abgas und Zusatz ausbildbar ist. Vorteilhafterweise kann so einerseits das Abgas oder das Gemisch aus Abgas und dem Zusatz eine gleichförmige Strömung ausbilden und / oder andererseits eine homogene gleichmässige Durchmischung und Verteilung des Abgases oder eines Gemischs aus Abgas und dem Zusatz erreicht werden.

Die Erfindung betrifft weiter eine Abgasreinigungsanlage zur Reinigung eines Abgases einer Hubkolbenbrennkraftmaschine, insbesondere eines Zweitakt Grossdieselmotors, umfassend eine Strömungseinheit. Die Abgasreinigungsanlage mit einer Strömungseinheit weist die gleichen Vorteile wie die entsprechende Strömungseinheit auf. Darüber hinaus sind, da aufgrund der Strömungseinheit deutlich effektiver, also schneller, eine optimale gleichförmige Strömung und / oder eine homogene Verteilung und eine optimale Durchmischung erreichbar sind, verkleinerte Baulängen bzw. Baugrössen der Abgasreinigungsanlage möglich. Gleichzeitig müssen keine Abstriche am Wirkungsgrad gegenüber konventionellen Abgasreinigungsanlagen ohne eine erfindungsgemässe Strömungseinheit hingenommen werden und es können erhebliche Mengen an Material, beispielsweise Rohre, an der Abgasreinigungsanlage eingespart werden. Ausserdem wird dadurch eine effektivere Abgasreinigung und eine einfache und kostengünstige Herstellung der Abgasreinigungsanlage erreicht.

Die o.g. Aufgabe wird auch durch ein Verfahren für eine Abgasreinigungsanlage zur Reinigung eines Abgases einer Hubkolbenbrennkraftmaschine, wobei eine Strömungseinheit ein Leitelement und ein Bremselement umfasst, gelöst. Das Leitelement ist als ein hohler Körper mit einem Leitelementeingang und einem Leitelementausgang ausgebildet, und eine Mantelfläche des Leitelements ist als Leitfläche ausgebildet. Das Bremselement ist als ein hohler Körper mit einem Bremseingang und einem Bremsausgang ausgebildet ist, und eine Mantelfläche des Bremselements ist als Bremsfläche ausgebildet. Ein Abgas strömt in den Leitelementeingang ein und durch den Bremsausgang aus. Die Leitfläche lenkt das Abgas derart um, dass das Abgas unter einem vorgegebenen Winkel α>0 auf die Bremsfläche auftrifft und am Bremsausgang eine Scherschicht aus Abgas gebildet wird.

Das Verfahrens weist die gleichen Vorteil wie die Strömungseinheit und die Abgasreinigungsanlage auf und ist mit der Strömungseinheit und / oder der Abgasreinigungsanlage durchführbar.

Insgesamt ermöglichen die Strömungseinheit sowie eine Abgasreinigungsanlage mit einer Strömungseinheit und das Verfahren einen effektiveren Betrieb der Abgasreinigungsanlage, insbesondere beim Harnstoff-SCR-Verfahren. Aufgrund einer homogeneren gleichförmigeren Geschwindigkeitsverteilung, also gleichförmigeren Strömung des Abgases bzw. des Abgases mit Zusatz und / oder einer besseren homogeneren Durchmischung des Abgases, insbesondere der NOx, bzw. des Abgases mit einem Zusatz, beispielsweise Harnstoff und / oder Wasser, wird eine effektivere Abgasreinigung erreicht.

Im Folgenden wird die Erfindung sowohl in apparativer als auch in verfahrenstechnischer Hinsicht anhand von Ausführungsbeispielen unter Bezugnahme auf die Zeichnung, in welchen gleiche oder funktionsgleiche Elemente mit identischen Bezugszeichen versehen sind, näher erläutert. In den schematischen Zeichnungen zeigt:
- Fig. 1: einen schematischen Aufbau einer Strömungseinheit in einer ersten Ausführungsform,
- Fig. 2: einen schematischen Aufbau einer Strömungseinheit in einer zweiten Ausführungsform,
- Fig. 3: einen schematischen Aufbau einer Strömungseinheit in einer dritten Ausführungsform,
- Fig. 4: einen schematischen Aufbau einer Strömungseinheit in einer vierten Ausführungsform und
- Fig. 5: einen schematischen Aufbau einer Strömungseinheit in einer fünften Ausführungsform und
- Fig. 6: einen schematischen Aufbau einer Strömungseinheit in einer sechsten Ausführungsform und
- Fig. 7: einen schematischen Querschnitt einer Strömungseinheit der sechsten Ausführungsform und
- Fig. 8: einen schematischen Aufbau eines Strömungselements und
- Fig. 9: einen schematischen Aufbau eines Auslassventils und
- Fig. 10: einen schematischen Aufbau einer Abgasreinigungsanlage in einer ersten Ausführungsform und
- Fig. 11: einen schematischen Aufbau einer Abgasreinigungsanlage in einer zweiten Ausführungsform.

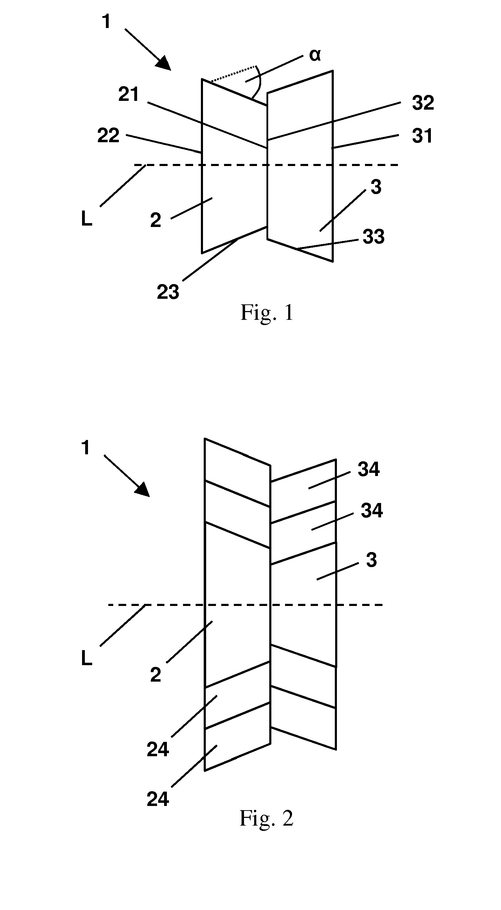

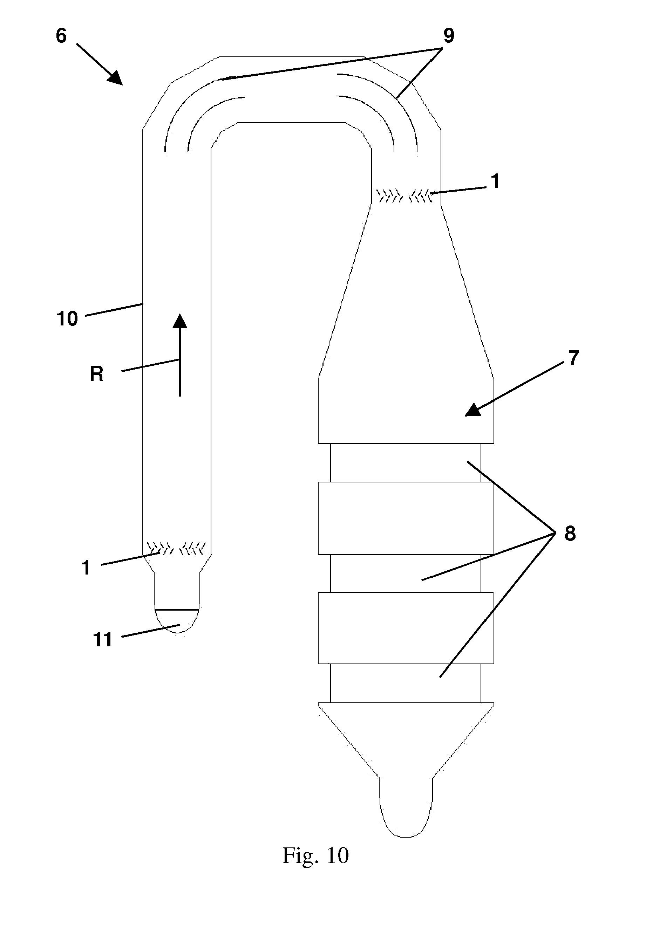

In Fig. 1 ist ein schematischer Aufbau einer Strömungseinheit in einer ersten Ausführungsform gezeigt. Die Strömungseinheit 1 für eine Abgasreinigungsanlage (siehe Fig. 10, Bezugszeichen 6) zur Reinigung eines Abgases einer Hubkolbenbrennkraftmaschine, umfasst ein Leitelement 3, das als ein hohler Körper mit einem Leitelementeingang 31 und einem Leitelementausgang 32 ausgebildet ist und ein Bremselement 2, das als ein hohler Körper mit einem Bremseingang 21 und einem Bremsausgang 22 ausgebildet ist. Ausserdem ist eine Mantelfläche des Leitelements als Leitfläche 33 ausgebildet und eine Mantelfläche des Bremselements als Bremsfläche 23 ausgebildet. Im Betriebszustand ist ein Abgas in den Leitelementeingang 31 einströmbar und durch den Bremsausgang 22 ausströmbar. Die Leitfläche 33 des Leitelements 3 ist dabei derart ausgestaltet und zur Bremsfläche 23 angeordnet, dass das Abgas unter einem vorgebbaren Abbremswinkel α>0 auf die Bremsfläche 23 auftrifft und am Bremsausgang 22 eine Scherschicht aus Abgas ausbildbar ist.

Wesentlich für die Erfindung ist somit, die Leitfläche 33 derart ausgestaltet und zur Bremsfläche 23 angeordnet ist, dass das Abgas von der Leitfläche 33 des Leitelements 3 derart umgelenkt wird, dass es auf die Bremsfläche 23 unter einem vorgebbaren Winkel α>0 auftrifft. Dadurch können unterschiedlich lange Laufwege für das Abgases bzw. ein Gemischs aus dem Abgas und einem Zusatz, insbesondere Harnstoff, bzw. unterschiedliche Teilströmungen entlang der beiden Seiten der Leitfläche 33 und der Bremsfläche 23 erzeugt werden und am Bremsausgang 22 ist eine Scherschicht aus Abgas oder aus einem Gemisch aus Abgas und einem Zusatz ausbildbar. Die verschiedenen Lagen der Scherschicht weisen unterschiedliche Strömungsgeschwindigkeiten und Strömungsrichtungen auf, sodass vorteilhafterweise eine besseren homogenere Durchmischung des Abgases oder des Gemischs aus dem Abgas und dem Zusatz erreicht wird. Ein weiterer Vorteil ist, dass das Leitelement 3 eine düsenartige Wirkung ähnlich zu einer Düse und das Bremselement 2 eine Wirkung ähnlich zu einem Diffusor aufweisen, sodass das aus dem Bremsausgang 22 austretende Abgas oder das Gemischs aus dem Abgas und dem Zusatz eine gleichförmige Strömung aufweisen.

Das Leitelement 3 und / oder das Bremselement 2 sind entlang einer gemeinsamen Längsachse L angeordnet. Die Anordnung des Leitelements 3 und / oder des Bremselements 2 kann dabei symmetrisch oder asymmetrisch zur Längsachse L erfolgen. Das Leitelement 3 ist als ein sich in Richtung zum Leitelementausgang 32 verengender hohler Körper und das Bremselement 2 als ein sich in Richtung zum Bremsausgang 22 erweitender hohler Körper ausgebildet. Sowohl der hohle Körper des Leitelements 3 als auch des hohle Körper des Bremselement 2 können dabei in Form eines geraden oder nicht geraden Kegels oder Kegelstumpfs ausgebildet sein. Ausserdem weist das Leitelement 3 einen Leitelementquerschnitt auf, der als ein sich in Richtung des Leitelementausgangs 32 verkleinernde Querschnittsfläche ausgebildet ist, und / oder ein Bremsquerschnitt des Bremselements 2 ist als eine sich in Richtung des Bremsausgangs 22 vergrössernde Querschnittsfläche ausgebildet. Der Leitelementquerschnitt und / oder der Bremsquerschnitt des in Fig. 1 gezeigten Leitelements 3 und Bremselements 2 ist kreisförmig, kann aber auch ellipsenförmig und / oder in Form eines regelmässigen oder unregelmässigen Vielecks, insbesondere in Form eines Dreiecks oder eines Vierecks oder eines Fünfecks ausgebildet sein.

Fig. 2 zeigt einen schematischen Aufbau einer Strömungseinheit 1 in einer zweiten Ausführungsform. Die Fig. 2 entspricht im Wesentlichen Fig. 1, weshalb nur auf die Unterschiede eingegangen wird. Die in Fig. 2 gezeigte Strömungseinheit 1 umfasst ein zwei weitere Leitelemente 34 und zwei weitere Bremselemente 24. Die weiteren Leitelemente 34 und sind koaxial zum Leitelement 3 und die weiteren Bremselemente 24 sind koaxial zum Bremselement 2 angeordnet. Ausserdem sind die weiteren Leitelemente 34, das Leitelement 3 sowie die weiteren Bremselemente 24 und das Bremselement 2 symmetrisch zur Längsachse angeordnet.

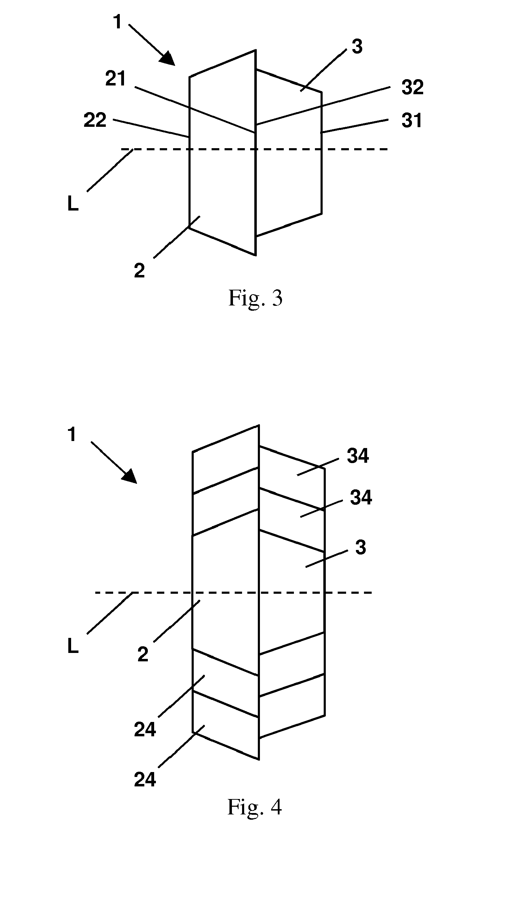

Fig. 3 zeigt einen schematischen Aufbau einer Strömungseinheit 1 in einer dritten Ausführungsform. Die Fig. 3 entspricht im wesentlichen Fig. 1, weshalb nur auf die Unterschiede eingegangen wird. In Fig. 3 sind das Leitelement 3 und das Bremselement 2 genau umgekehrt zur Fig. 1 ausgeführt. Das Leitelement 3 ist als ein sich in Richtung zum Leitelementausgang 32 erweiternder hohler Körper, insbesondere als Kegelstumpf, und das Bremselement 2 als ein sich in Richtung zum Bremsausgang 22 verengender hohler Körper, insbesondere als Kegelstumpf, ausgebildet. Das Leitelement 3 und das Bremselement 2 sind entlang einer gemeinsamen Längsachse L angeordnet. Das Leitelement 3 weist dabei eine Wirkung wie ein Diffusor und das Bremselement 2 eine Wirkung wie eine Düse auf, sodass das aus dem Bremsausgang 22 austretende Abgas bzw. das Gemischs aus dem Abgas und dem Zusatz eine gleichförmige Strömung und eine homogene Durchmischung aufweisen.

Fig. 4 zeigt einen schematischen Aufbau einer Strömungseinheit 1 in einer vierten Ausführungsform. Die Fig. 4 entspricht im Wesentlichen einer Mischform aus Fig. 2 und Fig. 3, weshalb nur auf die Unterschiede eingegangen wird. Die in Fig. 4 gezeigte Strömungseinheit 1 umfasst ein zwei weitere Leitelemente 34 und zwei weitere Bremselemente 24. Die weiteren Leitelemente 34 und sind koaxial zum Leitelement 3 und die weiteren Bremselemente 24 sind koaxial zum Bremselement 2 angeordnet. Die weiteren Leitelemente 34, das Leitelement 3 sowie die weiteren Bremselemente 24 und das Bremselement 2 sind symmetrisch zur Längsachse angeordnet. Ausserdem sind das Leitelemente 3 und die weiteren Leitelemente 34 als sich in Richtung zum Leitelementausgang 32 erweiternde hohle Kegelstümpfe und das Bremselement 2 und die weiteren Bremselemente 24 als sich in Richtung zum Bremsausgang 22 verengende hohle Kegelstümpfe ausgebildet.

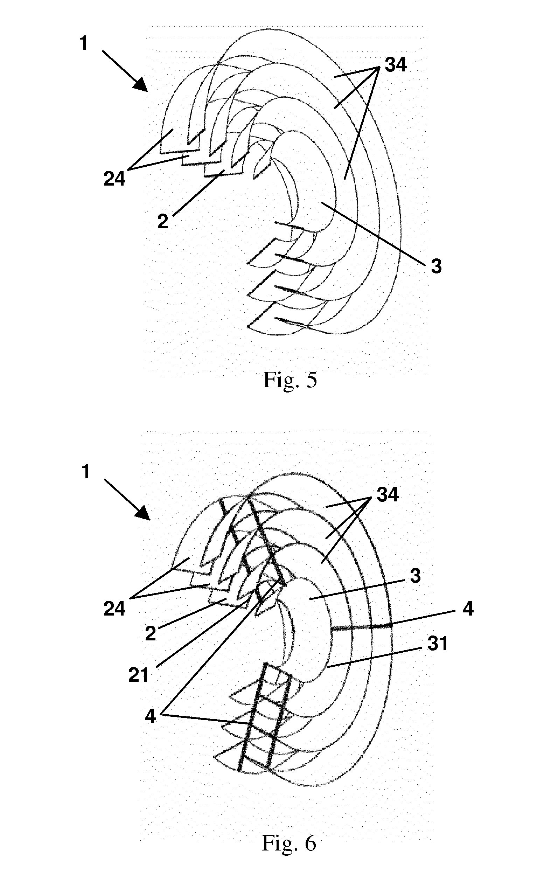

Fig. 5 zeigt einen schematischen Aufbau einer Strömungseinheit 1 in einer fünften Ausführungsform. Fig. 5 entspricht im Wesentlichen Fig. 2, weshalb nur auf die Unterschiede eingegangen wird. Fig. 5 zeigt einen dreidimensionalen schematischen Aufbau einer Strömungseinheit 1, wobei die Strömungseinheit ein Leitelement 3, drei weitere Leitelemente 34, ein Bremselement 2 und zwei weitere Bremselemente 24 umfasst. Die weiteren Leitelemente 34 und sind koaxial zum Leitelement 3 und die weiteren Bremselemente 24 sind koaxial zum Bremselement 2 angeordnet. Ausserdem sind die weiteren Leitelemente 34, das Leitelement 3 sowie die weiteren Bremselemente 24 und das Bremselement 2 symmetrisch zur Längsachse angeordnet.

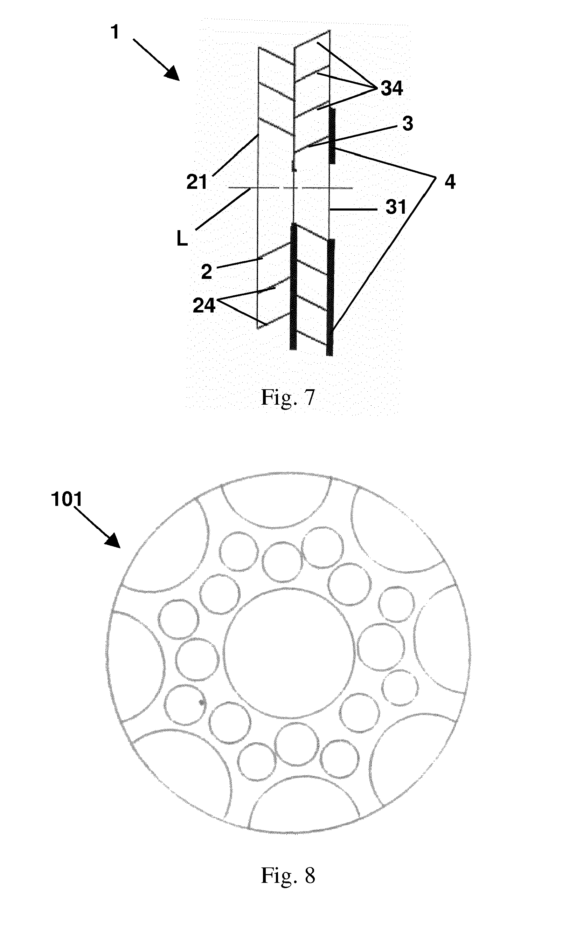

Fig. 6 und Fig. 7 zeigen einen schematischen dreidimensionalen Aufbau einer Strömungseinheit 1 (Fig. 6) und einen schematischen Querschnitt der Strömungseinheit 1 (Fig. 7) in einer sechsten Ausführungsform. Fig. 6 und Fig. 7 entsprechen im Wesentlichen Fig. 5, weshalb nur auf die Unterschiede eingegangen wird. Vor dem Leitelementeingang 31 kann ein Injektor 4 angeordnet sein, wobei der Injektor 4 derart ausgestaltet und angeordnet ist, dass ein Zusatz in das Abgas injizierbar ist, sodass am Bremsausgang 22 eine Scherschicht aus Abgas und dem Zusatz ausbildbar ist. Die Strömungseinheit kann zwischen, insbesondere vor, einem Reaktor 7 (siehe Fig. 10) der Abgasreinigungsanlage 6 (siehe Fig. 10) und einem Abgaseingang 11 (siehe Fig. 10), der mit einem Abgasausgang eines Abgassammelrohrs der Hubkolbenbrennkraftmaschine (nicht dargestellt) verbunden ist, angeordnet sein. Der Injektor 4 kann vor der Strömungseinheit 1 vor dem Leitelementeingang 31, also zwischen Strömungseinheit 1 und dem Abgaseingang 11 angeordnet sein. Der Injektor 4 kann also an einem Abgaseingang 11, unmittelbar nach dem Abgasausgang angeordnet sein oder aber zwischen der Strömungseinheit 1 und dem Abgaseingang 11 oder unmittelbar vor der Strömungseinheit 1 oder direkt am Leitelementeingang 31. Der Injektor kann aber auch als ein Bauteil der Strömungseinheit 1 ausgebildet sein, also am Leitelementeingang 31 und / oder zwischen dem Leitelement 3 und dem Bremselement 2 am Bremseingang 21 und / oder am Bremselement 2 am Bremsausgang 22 angeordnet sein. Wie in Fig. 6 und Fig. 7 gezeigt ist der Injektor in der sechsten Ausführungsform am Leitelementeingang 31 und weiteren Leitelementeingängen sowie zwischen dem Leitelement 3 und dem Bremselement 2 bzw. den weiteren Leitelementen 34 und den weiteren Bremselementen 24 angeordnet. Mit dem Injektor 4 ist der Zusatz, bevorzugt Harnstoff und / oder Wasser in das Abgas injizierbar, bevorzugt am Bremsausgang 22,und am Bremsausgang 22 ist eine Scherschicht aus Abgas und dem Zusatz ausbildbar. Vorteilhafterweise kann somit auf ein Einlassrohr und / oder ein Reaktionsrohr 10 (siehe Fig. 10) in der Abgasreinigungsanlage 6 verzichtet werden und die Abgasreinigungsanlage 6 kann kostengünstiger und einfacher hergestellt werden.

Fig. 8 zeigt einen schematischen Aufbau eines Strömungselements 101. Das Strömungselement kann in der Abgasreinigungsanlage 6 angeordnet sein.

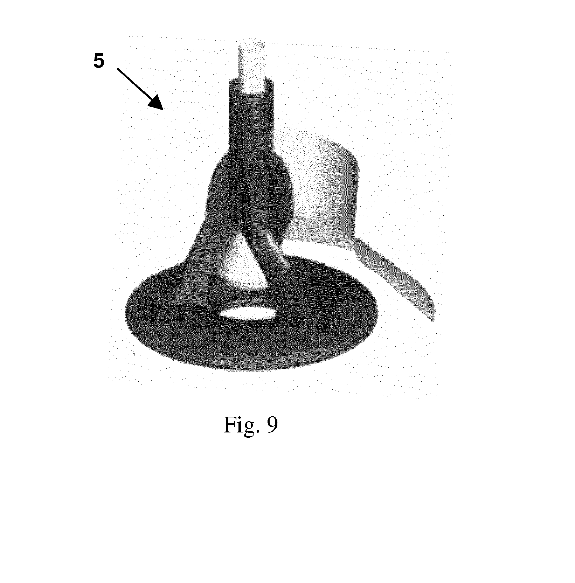

Fig. 9 zeigt einen schematischen Aufbau eines Auslassventils 5. Das Auslassventil 5 ist in einem Zylinderdeckel eines Zylinders der Hubkolbenbrennkraftmaschine angeordnet. Das Auslassventil ermöglicht dem Abgas aus einem Brennraum des Zylinders auszuströmen und leitet das Abgas in ein Abgassammelrohr, in welchem die Abgase eines oder mehrerer Zylinder gesammelt werden.

Fig. 10 zeigt einen schematischen Aufbau einer Abgasreinigungsanlage 6 in einer ersten Ausführungsform. Die Abgasreinigungsanlage 6 zur Reinigung eines Abgases einer Hubkolbenbrennkraftmaschine, insbesondere eines Zweitakt-Grossdieselmotors, umfasst eine Strömungseinheit 1, einen Reaktor 7 mit den darin angeordneten Katalysatorplatten 8, Umlenkeinheiten 9, ein Reaktionsrohr 10 und dem Abgaseingang 11. Die Strömungsrichtung des Abgases oder des Gemischs aus Abgas und dem Zusatz ist durch den Pfeil R bezeichnet. Eine oder mehrere Strömungseinheiten 1 kann zwischen dem Reaktor 7 und dem Abgaseingang 11 angeordnet sein. Es kann aber auch ein Strömungselement 101 in der Abgasreinigungsanlage, insbesondere zwischen dem Reaktor 7 und dem Abgaseingang 11 angeordnet sein. In Fig. 10 ist eine Strömungseinheit 1 zwischen Abgaseingang 11 und dem Reaktionsrohr 10 angeordnet und eine Strömungseinheit 1 unmittelbar vor dem Reaktor 7, im Einlassbereich des Reaktors 7. Das Abgas kann durch den Abgaseingang 11 in die Abgasreinigungsanlage 6 einströmen, wobei ein Injektor (siehe Fig. 6 oder 7, Bezugszeichen 4), der einen Zusatz in das Abgas injiziert, vor der Strömungseinheit 1 oder aber am Leitelementeingang 31 und / oder zwischen dem Leitelement 3 und dem Bremselement 2 angeordnet sein kann. Nachdem im Betriebszustand ein Abgas oder das Abgas und der Zusatz aus dem Bremsausgang 22 ausgeströmt ist, liegt das Abgas oder das Gemisch aus Abgas und der Zusatz als im Wesentlichen homogene Mischung vor die als eine gleichförmigen Strömung in das Reaktionsrohr 10 einströmen. Aufgrund der optimalen homogenen Durchmischung erfolgt die Abgasreinigung um ein vielfaches effektiver.

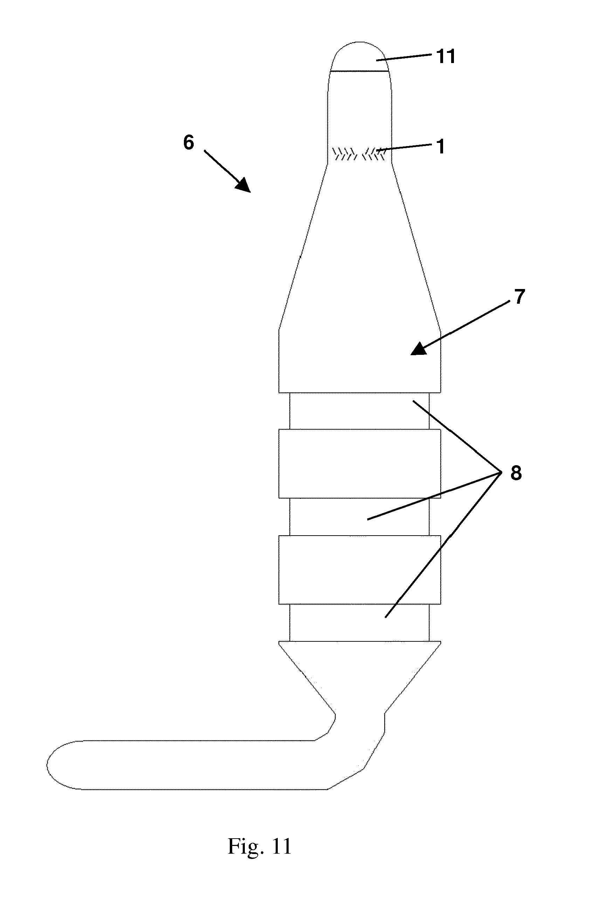

Fig. 11 zeigt einen schematischen Aufbau einer Abgasreinigungsanlage 6 in einer zweiten Ausführungsform. Fig. 11 entspricht im Wesentlichen Fig. 10, weshalb nur auf die Unterschiede eingegangen wird. Bei der in Fig. 11 gezeigten zweite Ausführungsformen kann auf ein Reaktionsrohr 10 sowie die Umlenkeinheiten 9 verzichtet werden, sodass eine einfachere Herstellung der Abgasreinigungsanlage erreicht wird.

Das erfindungsgemässe Verfahren für eine Abgasreinigungsanlage 6 zur Reinigung eines Abgases einer Hubkolbenbrennkraftmaschine ist mit allen gezeigten Ausführungsformen der Abgasreinigungsanlage 6 und der Strömungseinheit 1 durchführbar. Eine Strömungseinheit 1 umfasst dabei ein Leitelement 3 und ein Bremselement 2. Ein Leitelement 3 ist als ein hohler Körper mit einem Leitelementeingang 31 und einem Leitelementausgang 32 ausgebildet, und eine Mantelfläche des Leitelements 3 ist als Leitfläche 33 ausgebildet. Das Bremselement 2 ist als ein hohler Körper mit einem Bremseingang 21 und einem Bremsausgang 22 ausgebildet, und eine Mantelfläche des Bremselements 2 ist als Bremsfläche 23 ausgebildet. Das Abgas oder das Gemisch aus Abgas und dem Zusatz strömt in den Leitelementeingang ein und durch den Bremsausgang aus. Wesentlich ist, dass die Leitfläche 33 das Abgas derart umlenkt, dass das Abgas unter einem vorgegebenen Winkel α>0 auf die Bremsfläche 23 auftrifft und am Bremsausgang 22 eine Scherschicht aus Abgas gebildet wird.

Somit steht vorteilhafterweise erstmals ein Strömungseinheit 1 für eine Abgasreinigungsanlage 6 bzw. eine Hubkolbenbrennkraftmaschinen, insbesondere für Zweitakt Grossdieselmotoren, sowie ein Verfahren zur Verfügung, mit welchen eine gleichförmige Strömung und / oder eine homogene Verteilung und optimale Durchmischung des Abgases oder des Abgases und einem Zusatz dadurch erreicht wird.

Darüber hinaus sind, da aufgrund der Strömungseinheit 1 und / oder der Abgasreinigungsanlage 6 bzw. dem Verfahren deutlich effektiver, also schneller, eine optimale gleichförmige Strömung und / oder eine optimale homogene Durchmischung erreichbar sind, verkleinerte Baulängen bzw. Baugrössen der Abgasreinigungsanlage möglich, wobei einerseits keine Abstriche am Wirkungsgrad gegenüber konventionellen Abgasreinigungsanlagen ohne eine Strömungseinheit hingenommen werden müssen und andererseits erhebliche Mengen an Material, beispielsweise Rohre, an der Abgasreinigungsanlage eingespart werden können. Somit wird eine effektivere Abgasreinigung und eine einfache Herstellung der Abgasreinigungsanlage erreicht.

## Patentansprüche

1. Strömungseinheit (1) für eine Abgasreinigungsanlage (6) zur Reinigung eines Abgases einer Hubkolbenbrennkraftmaschine, wobei die Strömungseinheit (1) umfasst,
- ein Leitelement (3), das als ein hohler Körper mit einem Leitelementeingang (31) und einem Leitelementausgang (32) ausgebildet ist, und eine Mantelfläche des Leitelements als Leitfläche (33) ausgebildet ist, und
- ein Bremselement (2), das als ein hohler Körper mit einem Bremseingang (21) und einem Bremsausgang (22) ausgebildet ist, und eine Mantelfläche des Bremselements als Bremsfläche (23) ausgebildet ist,
wobei im Betriebszustand ein Abgas in den Leitelementeingang (31) einströmbar und durch den Bremsausgang (22) ausströmbar ist,
**dadurch gekennzeichnet, dass**
die Leitfläche (33) derart ausgestaltet und zur Bremsfläche (23) angeordnet ist, dass das Abgas unter einem vorgebbaren Abbremswinkel α>0 auf die Bremsfläche (23) auftrifft und am Bremsausgang (22) eine Scherschicht aus Abgas ausbildbar ist.

2. Strömungseinheit nach Anspruch 1, wobei das Leitelement (3) als ein sich in Richtung zum Leitelementausgang (32) verengender hohler Körper, insbesondere in Form eines geraden oder nicht geraden Kegels oder Kegelstumpfs ausgebildet ist, und das Bremselement (2) als ein sich in Richtung zum Bremsausgang (22) erweitender hohler Körper, insbesondere in Form eines geraden oder nicht geraden Kegels oder Kegelstumpfs ausgebildet ist.

3. Strömungseinheit nach Anspruch 1, wobei das Leitelement als ein sich in Richtung zum Leitelementausgang erweiternder hohler Körper, insbesondere in Form eines geraden oder nicht geraden Kegels oder Kegelstumpfs ausgebildet ist, und das Bremselement als ein sich in Richtung zum Bremsausgang verengender hohler Körper, insbesondere in Form eines geraden oder nicht geraden Kegels oder Kegelstumpfs ausgebildet ist.

4. Strömungseinheit nach einem der vorangehenden Ansprüche, wobei das Leitelement (3) und / oder das Bremselement (2) entlang einer gemeinsamen Längsachse (L) angeordnet sind.

5. Strömungseinheit nach einem der vorangehenden Ansprüche, wobei ein Leitelementquerschnitt des Leitelements (3), als eine sich in Richtung Leitelementausgangs (32) vergrössernde Querschnittsfläche ausgebildet ist, und / oder ein Bremsquerschnitt des Bremselements (2), als eine sich in Richtung des Bremsausgangs (22) verkleinernde Querschnittsfläche ausgebildet ist.

6. Strömungseinheit nach einem der vorangehenden Ansprüche, wobei ein Leitelementquerschnitt des Leitelements (3), als eine sich in Richtung des Leitelementausgangs (32) verkleinernde Querschnittsfläche ausgebildet ist, und / oder ein Bremsquerschnitt des Bremselements (2), als eine sich in Richtung des Bremsausgangs (22) vergrössernde Querschnittsfläche ausgebildet ist.

7. Strömungseinheit nach einem der vorangehenden Ansprüche, wobei der Leitelementquerschnitt und / oder der Bremsquerschnitt, kreisförmig und / oder ellipsenförmig und / oder in Form eines regelmässigen oder unregelmässigen Vielecks, insbesondere in Form eines Dreiecks oder eines Vierecks oder eines Fünfecks ausgebildet ist.

8. Strömungseinheit nach einem der vorangehenden Ansprüche, wobei vor dem Leitelementeingang (31) ein Injektor (4) angeordnet ist und der Injektor (4) derart ausgestaltet und angeordnet ist, dass ein Zusatz in das Abgas injizierbar ist, sodass am Bremsausgang (22) eine Scherschicht aus Abgas und dem Zusatz ausbildbar ist.

9. Strömungseinheit nach einem der vorangehenden Ansprüche, wobei der Injektor (4) am Leitelementeingang (31) und / oder zwischen dem Leitelement (3) und dem Bremselement (2) und / oder am Bremsausgang (22) angeordnet ist und der Injektor (4) derart ausgestaltet und angeordnet ist, dass ein Zusatz in das Abgas injizierbar ist, sodass am Bremsausgang (22) eine Scherschicht aus Abgas und dem Zusatz ausbildbar ist.

10. Strömungseinheit nach einem der vorangehenden Ansprüche, wobei die Strömungseinheit (1) ein weiteres Leitelement (34) umfasst, insbesondere ein zum Leitelement (3) identisches weiteres Leitelement (34), und / oder ein weiteres Bremselement (24) umfasst, insbesondere ein zum Bremselement (2) identisches weiteres Bremselement (24).

11. Strömungseinheit nach Anspruch 10, wobei das Leitelement (3) und das weitere Leitelement (34) koaxial angeordnet sind, und / oder das Bremselement (2) und das weitere Bremselement (24) koaxial angeordnet sind.

12. Strömungseinheit nach einem der vorangehenden Ansprüche, wobei der vorgebbaren Abbremswinkel zwischen 0° ≤ α ≤ 60°, bevorzugt zwischen 20° ≤ α ≤ 40°, beträgt.

13. Strömungseinheit nach Anspruch 10 oder 11, wobei das Leitelement (3) und / oder das weitere Leitelement und / oder das Bremselement (2) und / oder das weitere Bremselement entlang der gemeinsamen Längsachse (L) angeordnet sind.

14. Abgasreinigungsanlage zur Reinigung eines Abgases einer Hubkolbenbrennkraftmaschine, insbesondere eines Zweitakt-Grossdieselmotors, umfassend eine Strömungseinheit (1) nach einem der vorangehenden Ansprüche.

15. Verfahren für eine Abgasreinigungsanlage (6) zur Reinigung eines Abgases einer Hubkolbenbrennkraftmaschine,
- wobei eine Strömungseinheit (1) ein Leitelement (3) und ein Bremselement (2) umfasst,
- und das Leitelement (3) als ein hohler Körper mit einem Leitelementeingang (31) und einem Leitelementausgang (32) ausgebildet ist, und eine Mantelfläche des Leitelements (3) als Leitfläche (33) ausgebildet ist,
- und das Bremselement (2) als ein hohler Körper mit einem Bremseingang (21) und einem Bremsausgang (22) ausgebildet ist, und eine Mantelfläche des Bremselements (2) als Bremsfläche (23) ausgebildet ist,
- wobei ein Abgas in den Leitelementeingang (31) einströmt und durch den Bremsausgang (22)ausströmt,
**dadurch gekennzeichnet, dass**
die Leitfläche (33) das Abgas derart umlenkt, dass das Abgas unter einem vorgegebenen Winkel α>0 auf die Bremsfläche (23) auftrifft und am Bremsausgang (22) eine Scherschicht aus Abgas gebildet wird.
